# FASCICULE DE BREVET EUROPEEN

(11) **EP 2 409 921 B1**
(45) Date de publication et mention de la délivrance du brevet: **20.05.2015**
(21) Numéro de dépôt: 11174418.1
(22) Date de dépôt: 18.07.2011
(51) Int. Cl.: B64D 29/06, F02K 1/70, F02K 1/12

(54) **Nacelle pour aéronef**
Triebwerksgondel für ein Luftfahrzeug
Nacelle for Aircraft

(30) Priorité: 20.07.2010 FR 1055897
(43) Date de publication de la demande: 25.01.2012
(73) Titulaire: AIRBUS OPERATIONS (S.A.S), 31060 Toulouse (FR)
(72) Inventeur: Letay, Benoît, 31620 BOULOC (FR); Galinier, Michael, 31300 TOULOUSE (FR); Saget, Benjamin, 31170 TOURNEFEUILLE (FR); Flin, Stéphane, 31200 TOULOUSE (FR)
(74) Mandataire: Gicquel, Olivier Yves Gérard

(56) Documents cités:
- WO-A1-2008/045070
- FR-A1- 2 887 854
- FR-A1- 2 929 998
- GB-A- 2 372 729

## Description

La présente invention appartient au domaine de l'aéronautique et en particulier des nacelles pour aéronef. Plus précisément, l'invention concerne une nacelle d'aéronef pour moteur à double flux équipée d'un capot de soufflante à section variable, ce capot comportant au moins un inverseur de poussée. FR 292998 A1 divulgue une nacelle avec les caractéristiques de la préambule de la revendication 1.

Il est connu d'équiper un aéronef de nacelles recevant chacune un moteur à réaction directe pour assurer ses déplacements sur terre et dans les airs. Chaque nacelle est montée sur l'intrados des ailes. De l'air est aspiré dans la nacelle, à l'endroit d'une extrémité avant de cette nacelle, située du côté avant de l'aéronef. La nacelle rejette l'air absorbé, à grande vitesse vers l'arrière de l'aéronef.

Pour permettre une avancée de l'aéronef, il est nécessaire qu'une masse d'air traversant la nacelle ait une vitesse de sortie plus grande que sa vitesse d'entrée. La vitesse de sortie de la masse d'air est augmentée, de manière connue, à l'intérieur de la nacelle.

L'air traversant la nacelle est composé de deux flux différents. Un premier flux, appelé flux primaire, transite par le moteur. Le flux primaire est directement éjecté hors de la nacelle depuis l'arrière du moteur. Un second flux, appelé flux secondaire, transite par un canal de passage d'air avant d'être éjecté hors de la nacelle. Le canal de passage d'air est ménagé entre une paroi interne d'un capot de la nacelle et une paroi externe du moteur et s'étend le long du turboréacteur.

Il est alors connu de munir ces nacelles d'inverseurs de poussée afin de diminuer la distance d'atterrissage de l'aéronef. Par distance d'atterrissage de l'aéronef, on entend la distance parcourue par l'aéronef entre l'instant où les trains d'atterrissage de l'aéronef touchent la piste d'atterrissage et le moment où l'aéronef est totalement à l'arrêt sur la piste. Ces inverseurs de poussée dévient tout ou partie des flux d'air sortant à l'arrière de la nacelle, pour les éjecter vers l'avant de l'aéronef. Ces inverseurs de poussée créent ainsi une traînée aérodynamique et donc une force de freinage appelée "contre poussée", qui contribue au ralentissement de l'aéronef.

On connaît de l'état de l'art différents inverseurs de poussée, tels que des inverseurs de poussée à portes pivotantes ou encore des inverseurs de poussée à grilles.

Les inverseurs de poussée à grilles comportent un capot mobile en translation sur lequel sont fixés des portes créant la surface extérieure du flux secondaire du moteur.

On connaît également une nacelle munie d'inverseurs de poussée à portes pivotantes comportant des portes ménagées dans l'épaisseur du capot de la nacelle. Ces portes sont reparties sur une circonférence de la nacelle. En position inactive, les portes sont fermées, c'est-à-dire qu'elles s'étendent dans un prolongement du capot. En position active, les portes sont ouvertes. Le débattement des portes est tel, qu'une partie des portes s'étend alors vers l'extérieur de la nacelle. Un axe de pivotement des portes est éloigné d'une extrémité de pivotement de ces portes. Par extrémité de pivotement, on entend l'extrémité des portes sur laquelle est ménagé l'axe de pivotement. Ainsi, lorsque les portes sont ouvertes, l'extrémité de pivotement des portes est située dans la nacelle, et obture au moins partiellement le canal de passage d'air. Le flux d'air est alors bloqué, et est évacué hors de la nacelle par un passage dégagé par l'ouverture des portes. La partie des portes qui s'étend hors de la nacelle permet de diriger le flux vers l'avant de la nacelle de manière à générer la force de freinage.

Selon la position des portes sur le capot, les inverseurs de poussée permettent d'inverser la poussée issue du flux secondaire seulement, ou la poussée issue du flux primaire et du flux secondaire. En effet, si les ouvertures obstruées par les portes des inverseurs de poussée sont ménagées sur une extrémité arrière du capot, le flux primaire est évacué par ces ouvertures, en même temps que le flux secondaire. Par contre, si les ouvertures sont ménagées en amont du flux primaire, seul le flux secondaire est évacué par les ouvertures sur le capot.

Bien qu'efficace, ces inverseurs de poussée ne servent qu'à générer une inversion de poussée et ne présentent pas d'autre fonction lorsqu'ils sont en position inactive.

Par ailleurs, certains moteurs nécessitent des capots de soufflante à section variable (VAN ― "variable area nozzle") de manière à améliorer leur rendement propulsif dans certaines conditions de vol, par exemple lorsque l'avion est proche du sol. Cette variation de la section d'écoulement du moteur peut être obtenue par translation ou rotation de pièces.

Ces systèmes d'inversion de poussée et de variation de la section d'écoulement du flux secondaire sont distincts l'un de l'autre, ce qui augmente considérablement le poids de la nacelle.

Or, ce surpoids engendre une consommation supplémentaire de kérosène incompatible avec les impératifs économiques des compagnies aériennes.

L'objectif de la présente invention est, par conséquent, de simplifier la nacelle et de réduire ainsi son poids en intégrant la fonction d'inversion de poussée au système de variation de la section d'écoulement du flux secondaire.

L'objectif de la présente invention est donc de proposer une nacelle pour moteur à double flux qui soit simple dans sa conception et dans son mode opératoire, cette nacelle comprenant un seul mécanisme réalisant les fonctions d'inversion de poussée et de variation de section de tuyère.

A cet effet, l'invention concerne une nacelle pour aéronef comportant un capot, un moteur logé dans un volume interne du capot et au moins un inverseur de poussée, un canal de passage d'air étant ménagé entre la paroi interne du capot et une paroi externe de ce moteur, le capot comporte une partie de capot fixe et une partie de capot mobile en translation entre une pluralité de positions, au moins une de ces positions assurant la variation du flux d'air dans ledit canal, la partie de capot mobile comprenant ledit au moins un inverseur de poussée de sorte que le déplacement en translation du capot mobile permet également à ce capot mobile de passer d'une position rentrée dudit au moins un inverseur de poussée à une position d'inversion de poussée dans laquelle le flux secondaire est déviée pour générer une inversion de poussée, ledit au moins un inverseur de poussée comprenant une porte pivotante, elle comporte au moins deux positions stables extrêmes, une position rentrée dans laquelle ladite porte est intégrée dans ledit capot, et une position d'inversion de poussée dans laquelle ladite porte est placée partiellement à l'intérieur et à l'extérieur de la nacelle pour dévier le flux secondaire et générer une inversion de poussée, ladite partie de capot mobile étant alors dans une position totalement déplacée.

Selon l'invention, dans ladite au moins une position de ladite partie de capot mobile assurant la variation du flux d'air dans ledit canal, ledit au moins un inverseur de poussée qui comporte une porte pivotante, présente une position intermédiaire stable dans laquelle la portion de ladite porte placée en aval par rapport au sens d'écoulement du flux secondaire dans la nacelle a un débattement dirigé vers l'extérieur de la nacelle.

Par "position rentrée", on entend une position stable dans laquelle les portes des inverseurs de poussée sont intégrées dans la partie de capot mobile en s'étendant dans un prolongement du capot.

Dans différents modes de réalisation particuliers de cette nacelle pour aéronef, chacun ayant ses avantages particuliers et susceptibles de nombreuses combinaisons techniques possibles:
- ledit au moins un inverseur de poussée comprenant une porte, la surface interne de ladite porte présente au moins une portion incurvée pour détourner le flux secondaire dans la direction d'inversion de poussée dans la position d'inversion de poussée de ladite partie de capot mobile,

Bien entendu, cette portion incurvée permet également de diriger vers l'arrière de la nacelle une partie du flux d'air secondaire dans ladite au moins une position assurant la variation du flux d'air dans ledit canal.
- ledit au moins un inverseur de poussée comprenant une porte, ledit inverseur de poussée comporte un organe de liaison reliant de manière pivotante ladite porte à la paroi externe dudit moteur,
- les inverseurs de poussée sont ménagés dans ladite partie de capot mobile en étant disposés sur la circonférence de ladite nacelle,
- les inverseurs de poussée étant répartis de manière non continue sur la circonférence de ladite partie de capot mobile, ladite nacelle comprend deux groupes de quatre portes d'inverseurs de poussée, lesdites portes étant diamétralement opposées deux à deux.

Enfin, l'invention concerne un aéronef équipé d'au moins une nacelle telle que décrite précédemment.

L'invention sera décrite plus en détail en référence aux dessins annexés dans lesquels:

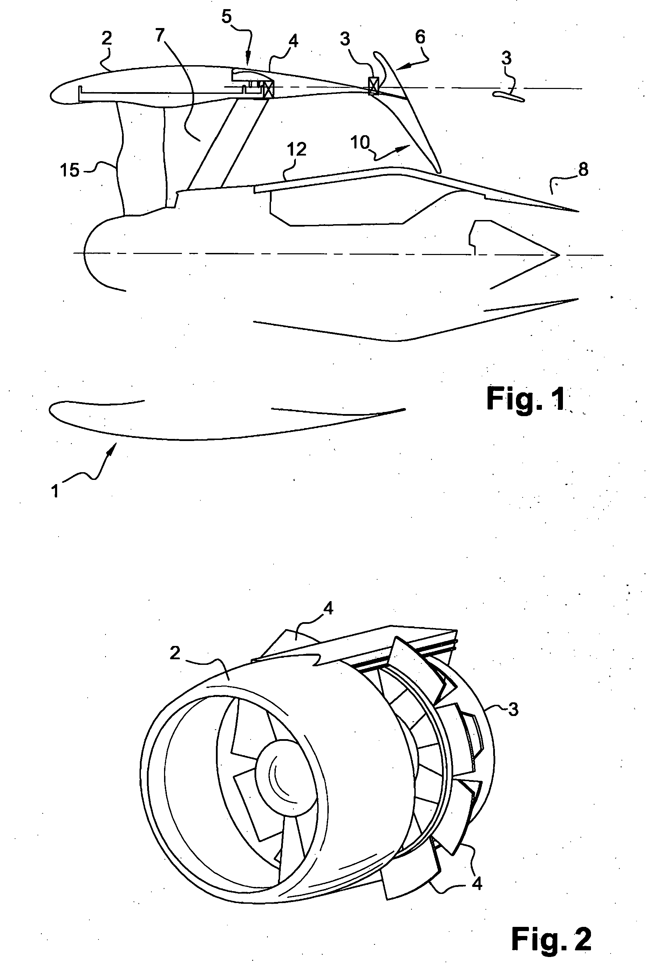

- la figure 1 est une vue partielle en coupe longitudinale d'une nacelle pour moteur à double flux dans un mode de réalisation particulier de l'invention, ladite partie de capot mobile étant représentée dans ses deux positions stables extrêmes, à savoir dans sa position rentrée et dans sa position d'inversion de poussée ;
- la figure 2 est une vue en perspective de la nacelle de la Figure 1 en position d'inversion de poussée de ladite partie de capot mobile ;

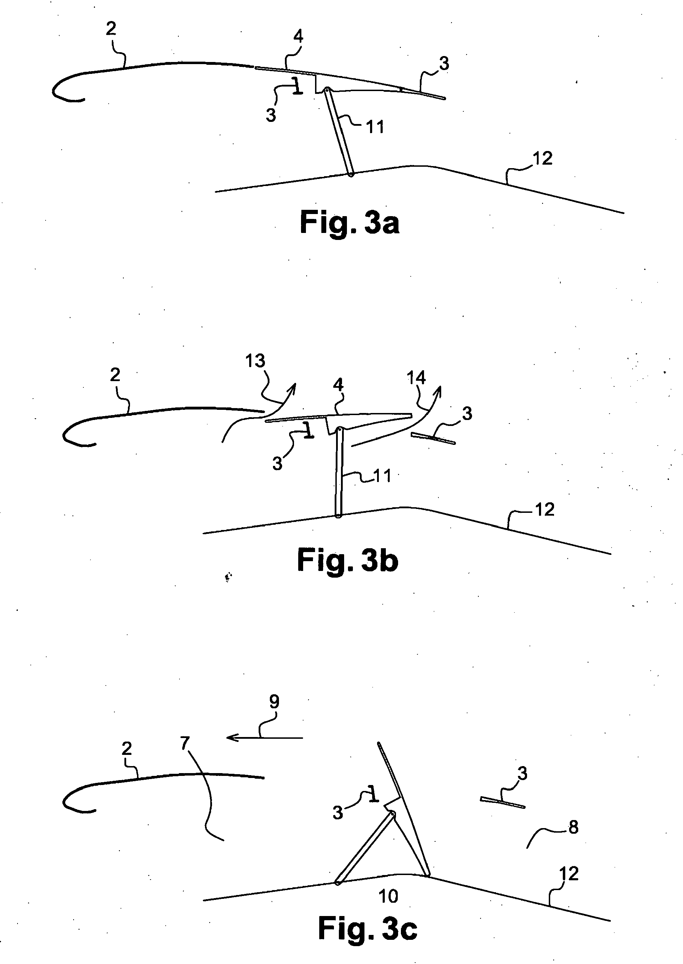

- la figure 3 est une vue élargie de la nacelle de la Figure 1 montrant successivement trois positions possibles de la partie de capot mobile, la position rentrée (Fig. 3a), une position assurant la variation du flux d'air dans le canal de passage (Fig. 3b) et la position d'inversion de poussée (Fig. 3c);

Les Figures 1 à 3 montrent une nacelle pour moteur à double flux selon un mode de réalisation préféré de l'invention. Cette nacelle comporte un capot 1 comprenant une partie de capot fixe 2 et une partie de capot mobile 3 en translation le long d'un axe longitudinal de la nacelle.

Cette nacelle comporte un moteur à double flux disposé dans le volume interne de la nacelle délimité par le capot 1. La nacelle comporte également une soufflante 15 disposée dans ce volume interne à l'avant du moteur. Par "avant", on entend dirigé vers un cockpit de l'aéronef sur lequel la nacelle doit être montée.

La nacelle est également munie d'inverseurs de poussée comprenant chacun une porte pivotante 4. Chacune de ces portes 4 est intégrée dans la partie avant de capot mobile 3 en étant articulée autour d'un axe orthoradial.

Sur la Figure 1, un inverseur de poussée est représenté dans deux positions stables extrêmes, une première position rentrée 5 et une position d'inversion de poussée 6.

Lorsque l'inverseur de poussée est dans sa position rentrée 5, la porte correspondante 4 s'étend dans le prolongement des parois des parties de capot fixe 2 et mobile 3 de la nacelle.

La Figure 2 représente la partie de capot mobile 3 de la nacelle en position d'inversion de poussée 6. Dans cette position, la partie de capot mobile 3 est complètement déplacée, ou en retrait, par rapport à la partie de capot fixe 2 de la nacelle.

On peut observer que les inverseurs de poussée sont ménagés dans la partie de capot mobile en étant disposés sur la circonférence de la nacelle.

La porte 4 de chaque inverseur de poussée est placée pour partie dans le volume interne de la nacelle de manière à obstruer le canal de passage 7 d'air dans lequel transite le flux d'air secondaire, et pour partie à l'extérieur de la nacelle (Fig. 1 et Fig. 3c). Le flux d'air secondaire ne peut alors plus se diriger vers l'extrémité arrière 8 de la nacelle, afin d'être expulsé hors de la nacelle.

Une partie de la surface intérieure de la porte 4 présente avantageusement une surface incurvée 10 de manière à dévier le flux d'air secondaire dans une direction d'inversion de poussée 9 en expulsant celui-ci par l'ouverture dégagée par la porte ouverte 4.

La partie de capot mobile 3 peut également prendre une position stable intermédiaire dans laquelle la portion arrière de la porte a un débattement dirigé vers l'extérieur de la nacelle (Fig. 3b). Ce débattement est obtenu grâce à l'organe de liaison, ici une bielle, 11 reliant de manière pivotante cette porte 4 à la paroi externe 12 du moteur. Cette paroi externe du moteur 12 peut être réalisée par un capot interne entourant ledit moteur.

Avantageusement, cette position intermédiaire permet d'obtenir deux chemins auxiliaires, ou chemins supplémentaires, 13, 14 pour l'évacuation du flux secondaire autorisant ainsi une variation de la section d'écoulement de ce flux secondaire dans le canal de passage 7. Un premier 13 de ces chemins auxiliaires autorise une déviation du flux secondaire entre le capot fixe 2 et la surface extérieure de la porte ouvrante 4. L'autre chemin auxiliaire 14 autorise une déviation du flux secondaire entre la surface intérieure de la porte ouvrante 4 et le capot mobile 3.

La partie de surface incurvée 10 de la surface intérieure de la porte 4 guide avantageusement le long de ce chemin supplémentaire une portion du flux secondaire transitant dans le canal de passage 7, vers l'arrière de la nacelle.

L'organe de liaison 11 présente, en conséquence, plusieurs positions correspondant aux différentes positions de la porte 4 de l'inverseur de poussée. Dans la position rentrée de la porte pivotante 4, l'organe de liaison 11 est inclinée vers l'avant du moteur. Dans la position d'inversion de poussée cette porte, l'organe de liaison 11 est incliné vers l'arrière. Dans la position intermédiaire stable de la porte pivotante 4, l'organe de liaison 11 est placé entre les deux positions inclinées décrites ci-dessus.

La nacelle comprend des moyens de commande permettant de déplacer la partie de capot mobile 3 en translation entre les positions décrites ci-dessus.

Ces moyens de commande comprennent de préférence un actionneur. A titre purement illustratif, cet actionneur comprend une section télescopique. Cette section télescopique peut être opérée de manière connue par une source d'alimentation hydraulique, pneumatique ou électrique.

La nacelle comprend également des éléments de guidage en translation de la partie de capot mobile 3. A titre purement illustratif, ces éléments de guidage comprennent des rails.

L'actionneur peut en outre être relié à un circuit de commande (non représenté) permettant depuis le cockpit de commander cet actionneur. Alternativement, cet actionneur peut être relié à un circuit de commande automatique qui déclenche le déplacement de la partie de capot mobile 3 en fonction des phases de vol de l'avion, par exemple en phase d'atterrissage ou de décollage.

Ces moyens de commande permettant de déplacer la partie de capot mobile de la position intermédiaire assurant la variation du flux d'air dans le canal de passage à la position d'inversion de poussée, et inversement sont uniques. Avantageusement, le passage de l'une de ces positions à l'autre peut donc être réalisé très rapidement en cas de décollage interrompu (RTO-"Rejected Takeoff").

## Revendications

1. Nacelle pour aéronef comportant un capot, un moteur logé dans un volume interne du capot et au moins un inverseur de poussée, un canal de passage d'air (7) étant ménagé entre la paroi interne dudit capot et une paroi externe dudit moteur (12), ledit capot comporte une partie de capot fixe (2) et une partie de capot mobile (3) en translation entre une pluralité de positions, au moins une desdites positions assurant la variation du flux d'air dans ledit canal (7), ladite partie de capot mobile (3) comprenant ledit au moins un inverseur de poussée de sorte que le déplacement en translation dudit capot mobile (3) permet également audit capot mobile (3) de passer d'une position rentrée dudit au moins un inverseur de poussée à une position d'inversion de poussée dans laquelle le flux secondaire est déviée pour générer une inversion de poussée, ledit au moins un inverseur de poussée comprenant une porte pivotante (4), elle comporte au moins deux positions stables extrêmes, une position rentrée (5) dans laquelle ladite porte (4) est intégrée dans ledit capot (1), et une position d'inversion de poussée (6) dans laquelle ladite porte (4) est placée partiellement à l'intérieur et à l'extérieur de la nacelle pour dévier le flux secondaire et générer une inversion de poussée, ladite partie de capot mobile (3) étant alors dans une position totalement déplacée, **caractérisée en ce que** dans ladite au moins une position de ladite partie de capot mobile (3) assurant la variation du flux d'air dans ledit canal (7), ledit au moins un inverseur de poussée qui comporte une porte pivotante (4), présente une position intermédiaire stable dans laquelle la portion de ladite porte placée en aval par rapport au sens d'écoulement du flux secondaire dans la nacelle a un débattement dirigé vers l'extérieur de la nacelle.

2. Nacelle selon la revendication 1, **caractérisée en ce que** ledit au moins un inverseur de poussée comprenant une porte pivotante (4), la surface interne de ladite porte présente au moins une portion incurvée pour détourner le flux secondaire dans la direction d'inversion de poussée (9) dans la position d'inversion de poussée (6) de ladite partie de capot mobile (3).

3. Nacelle selon la revendication 1 ou 2, **caractérisée en ce que** ledit au moins un inverseur de poussée comprenant une porte (4), ledit inverseur
de poussée comporte un organe de liaison (11) reliant de manière pivotante ladite porte (4) à la paroi externe (12) dudit moteur.

4. Nacelle selon l'une des revendications 1 à 3, **caractérisée en ce qu'**elle comprend des moyens de commande permettant de déplacer ladite partie de capot mobile (3) en translation entre ladite pluralité de positions.

5. Nacelle selon l'une quelconque des revendications 1 à 4, **caractérisée en ce qu'**elle comporte des éléments de guidage en translation de ladite partie de capot mobile (3).

6. Nacelle selon l'une quelconque des revendications 1 à 5, **caractérisée en ce que** lesdits inverseurs de poussée sont ménagés dans ladite partie de capot mobile (3) en étant disposés sur la circonférence de ladite nacelle.

7. Nacelle selon la revendication 6, **caractérisée en ce que** lesdits inverseurs de poussée étant répartis de manière non continue sur ladite circonférence, ladite nacelle comprend deux groupes de quatre portes d'inverseurs de poussée, lesdites portes étant diamétralement opposées deux à deux.

8. Aéronef équipé d'au moins une nacelle selon l'une quelconque des revendications 1 à 7.

## Patentansprüche

1. Triebwerksgondel, die eine Haube, einen in einem Innenvolumen untergebrachten Motor und mindestens Schubumkehrer umfasst, wobei ein Luftdurchgangskanal (7) zwischen der Innenwand der Haube und einer Außenwand des Motors (12) ausgebildet ist, wobei die Haube einen feststehenden Haubenteil (2) und einen zwischen mehreren Positionen translatorisch beweglichen Haubenteil (3) umfasst, wobei mindestens eine der Positionen die Änderung des Luftstroms in den Kanal (7) gewährleistet, wobei der bewegliche Haubenteil (3) den mindestens einen Schubumkehrer umfasst, so dass die translatorische Bewegung der beweglichen Haube (3) der beweglichen Haube (3) weiterhin gestattet, aus einer Position, in der der mindestens eine Schubumkehrer eingezogen ist, in eine Schubumkehrposition zu gelangen, in der der Sekundärstrom umgeleitet wird, um eine Schubumkehr zu erzeugen, wobei der mindestens eine Schubumkehrer eine Schwenkklappe (4) aufweist, die mindestens zwei stabile Endpositionen hat, eine eingezogene Position (5) in der die Klappe (4) in der Haube (1) integriert ist, und eine Schubumkehrposition (6), in der die Klappe (4) teilweise innerhalb und teilweise außerhalb der Triebwerksgondel platziert ist, um den Sekundärstrom umzuleiten und eine Schubumkehr zu erzeugen, wobei der bewegliche Haubenteil (3) dann eine vollständig verschobene Position einnimmt, **dadurch gekennzeichnet, dass** in der mindestens einen Position des beweglichen Haubenteils (3), die die Änderung des Luftstroms in den Kanal (7) gewährleistet, der mindestens eine Schubumkehrer, der eine Schwenkklappe (4) umfasst, eine stabile Zwischenposition aufweist, in der der Teil der Klappe, der bezüglich der Strömungsrichtung des Sekundärstroms in der Triebwerksgondel stromabwärts platziert ist, einen zur Außenseite der Triebwerksgondel gerichteten Schwenkausschlag hat.

2. Triebwerksgondel nach Anspruch 1, **dadurch gekennzeichnet, dass** bei dem mindestens einen Schubumkehrer, der eine Schwenkklappe (4) aufweist, die Innenfläche der Klappe mindestens einen gekrümmten Teil aufweist, um den Sekundärstrom in Schubumkehrrichtung (9) umzulenken, wenn sich der bewegliche Haubenteil (3) in der Schubumkehrposition (6) befindet.

3. Triebwerksgondel nach Anspruch 1 oder 2, **dadurch gekennzeichnet, dass** bei dem mindestens einen Schubumkehrer der eine Klappe (4) umfasst, der Schubumkehrer ein Verbindungsglied (11) aufweist, das die Klappe (4) schwenkbar mit der Außenwand (12) des Motors verbindet.

4. Triebwerksgondel nach einem der Ansprüche 1 bis 3, **dadurch gekennzeichnet, dass** sie Betätigungsmittel umfasst, die das translatorische Bewegen des beweglichen Haubenteils (3) zwischen den mehreren Positionen gestatten.

5. Triebwerksgondel nach einem der Ansprüche 1 bis 4, **dadurch gekennzeichnet, dass** sie Elemente zum translatorischen Führen des beweglichen Haubenteils (3) umfasst.

6. Triebwerksgondel nach einem der Ansprüche 1 bis 5, **dadurch gekennzeichnet, dass** die Schubumkehrer in dem beweglichen Haubenteil (3) ausgebildet sind, indem sie um den Umfang der Triebwerksgondel angeordnet sind.

7. Triebwerksgondel nach Anspruch 6, **dadurch gekennzeichnet, dass** bei den Schubumkehrern, die nicht kontinuierlich um den Umfang verteilt sind, die Triebwerksgondel zwei Gruppen von vier Schubumkehrerklappen umfasst, wobei sich die Klappen in Paaren diametral gegenüberliegen.

8. Luftfahrzeug, das mit mindestens einer Triebwerksgondel nach einem der Ansprüche 1 bis 7 ausgestattet ist.

## Claims

1. Aircraft nacelle comprising a cowling, an engine housed in an internal volume of the cowling and at least one thrust reverser, an air passage duct (7) being formed between the internal wall of the said cowling and an external wall of the said engine (12), the said cowling comprises a fixed cowling part (2) and a moving cowling part (3) capable of translational movement between a plurality of positions, at least one of the said positions varying the air flow through the said duct (7), the said moving cowling part (3) comprising the said at least one thrust reverser so that translational movement of the said moving cowling (3) also allows the said moving cowling (3) to switch from a position in which the said at least one thrust reverser is retracted into a reverse-thrust position in which the bypass flow is deflected to generate a reverse thrust, the said at least one thrust reverser comprising a pivoting door (4), it comprises at least two extreme stable positions, a retracted position (5) in which the said door (4) is incorporated into the said cowling (1), and a reverse-thrust position (6) in which the said door (4) is positioned partially inside and outside the nacelle to divert the bypass flow and to generate reverse thrust, the said moving cowling part (3) then being in a fully displaced position, **characterized in that**, when the said moving cowling part (3) is in the said at least one position that varies the air flow through the said passage (7), the said at least one thrust reverser which comprises a pivoting door (4) has a stable intermediate position in which the portion of the said door that is positioned downstream in relation to the direction of travel of the bypass flow through the nacelle has an excursion directed towards the outside of the nacelle.

2. Nacelle according to Claim 1, **characterized in that**, with the said at least one thrust reverser comprising a pivoting door (4), the internal surface of the said door has at least one curved portion to deflect the bypass flow in the reverse-thrust direction (9) when the said moving cowling part (3) is in the reverse-thrust position (6).

3. Nacelle according to Claim 1 or 2, **characterized in that**, with the said at least one thrust reverser comprising a door (4), the said thrust reverser comprises a connecting member (11) pivotally connecting the said door (4) to the external wall (12) of the said engine.

4. Nacelle according to one of Claims 1 to 3, **characterized in that** it comprises control means allowing the said moving cowling part (3) to be moved in terms of translation between the said plurality of positions.

5. Nacelle according to any one of Claims 1 to 4, **characterized in that** it comprises guide elements guiding the translational movement of the said moving cowling part (3).

6. Nacelle according to any one of Claims 1 to 5, **characterized in that** the said thrust reversers are formed in the said moving cowling part (3), being positioned around the circumference of the said nacelle.

7. Nacelle according to Claim 6, **characterized in that**, with the said thrust reversers being distributed non-continuously around the said circumference, the said nacelle comprises two groups of four thrust reverser doors, the said doors being diametrically opposed in pairs.

8. Aircraft equipped with at least one nacelle according to any one of Claims 1 to 7.
